# EUROPEAN PATENT APPLICATION

(11) **EP 1 646 233 A2**
(43) Date of publication of application: **12.04.2006**
(21) Application number: 04028014.1
(22) Date of filing: 25.11.2004
(51) Int. Cl.: H04N 5/782

(54) **Apparatus and method for performing reserved recording function**

(30) Priority: 11.10.2004 KR 2004080980
(71) Applicant: Topfield Co., Ltd., Seongnam-si Gyeonggi-do (KR)
(72) Inventor: Jong-Won, Kim, Seongnam, Kyonggy-Do (KR)
(74) Representative: Grünecker, Kinkeldey, Stockmair & Schwanhäusser Anwaltssozietät

(57) **Abstract**

A reserved recording method for use in the broadcast signal recorder capable of recording a received broadcast signal in a recording medium includes the steps of: receiving reserved recording time information and reserved recording channel information (205), and storing the received time and channel information (210); determining whether a user views the reserved recording channel information at the reserved recording time (215,220,230); and deleting the stored reserved recording time and channel information (235,240,245) if it is determined that the user views the reserved recording channel information at the reserved recording time.

## Description

### BACKGROUND OF THE INVENTION

### Field of the Invention

The present invention relates to a broadcast signal recorder device, and more particularly to an apparatus and method for performing a reserved recording function of the broadcast signal recorder device.

### Description of the Related Art

Typically, a Hard Disk Drive (HDD) acting as an auxiliary memory for use in a computer system is able to perform a random access function, transmits data at a high transfer rate, is less expensive than other auxiliary memories, and is configured in the form of a mass storage device, so that it is being widely used as a random access storage device such as a Random Access Memory (RAM). The broadcast signal recorder device equipped with the random access storage device is indicative of a system capable of recording/reproducing a Transport Stream (TS) acting as a broadcast signal, and viewing the same transport stream at a later time. Representative examples of the broadcast signal recorder device are a set-top box system with an HDD as a satellite broadcast receiver, and a Personal Video Recorder (PVR) system manufactured by Tivo Corporation, etc.

The above-mentioned broadcast signal recorder devices are basically equipped with reserved recording functions, respectively. The reserved recording function is adapted to record broadcast signals generated from a user-selected channel when a current time reaches a reserved recording time determined by a user.

The above-mentioned conventional reserved recording function is programmed to record the user-selected channel even when the user currently views the user-selected channel at the reserved recoding time. Therefore, the conventional reserved recording function has a disadvantage in that a user must stop the reserved recording function by pressing a specific key button of the recorder device while viewing broadcast signals of the user-selected channel, or the user must delete a file recorded by the reserved recording function without reproducing data of the file after viewing the broadcast signals of the same channel as the user-selected channel, resulting in greater inconvenience of the user.

In order to use the above-mentioned reserved recording function, the user must recognize the start and end times and channel information of a desired broadcast program, etc. by referring to an Electronic Program Guide (EPG), and must determine a desired reserved recording time and a desired reserved recoding channel on the basis of the recognized information.

However, the above-mentioned reserved recording method provides a user unskilled in handling the recorder device or other users hurriedly leaving their rooms with greater inconvenience of use, such that there must be developed an improved method for providing the above users with more convenient reserved recording functions.

### SUMMARY OF THE INVENTION

Therefore, the present invention has been made in view of the above problems, and it is an object of the present invention to provide an apparatus and method for performing a reserved recording function, which can selectively perform a reserved recording function by determining whether or not a user currently views broadcast signals of a user-selected channel determined by a reserved recording function, when a current time reaches a reserved recording time in a broadcast signal recorder device.

It is another object of the present invention to provide an apparatus and method for performing a reserved recording function without setting a reserved recording time and a reserved recording channel.

In accordance with one aspect of the present invention, the above and other objects can be accomplished by the provision of a reserved recording method for use in a broadcast signal recorder capable of recording a received broadcast signal in a recording medium, comprising the steps of: receiving reserved recording time information and reserved recording channel information, and storing the received time and channel information; determining whether a user views the reserved recording channel information at the reserved recording time; and deleting the stored reserved recording time and channel information if it is determined that the user views the reserved recording channel information at the reserved recording time.

Preferably, the method may further include the steps of: storing viewing-channel information for every time zone; extracting channel information having a high viewing frequency during individual time zones from the stored viewing-channel information for every time zone when a simple reserved recording command is generated; and recording a broadcast program of the channel having a high viewing frequency during a corresponding extracted time zone when a current time reaches individual extracted time zones.

In accordance with another aspect of the present invention, there is provided a broadcast signal recorder apparatus including a tuner/demodulator unit for demodulating a broadcast signal received from a selected channel and a decoder for decoding the demodulated broadcast signal in the form of video and audio streams, and recording a signal-processed broadcast stream in a recording medium, the apparatus comprising: a reserved recording controller for receiving reserved recording time information and reserved recording channel information, recording the reserved recording channel information when a current time reaches the reserved recording time, and deleting the stored reserved recording time and channel information when a user views the reserved recording channel information at the reserved recording time.

Preferably, the apparatus may further include: a viewing-content storage unit for storing viewing-channel information for every time zone in a memory; a channel information extractor for extracting channel information having a high viewing frequency during individual time zones from the information stored in the memory; and a simple reserved recorder for recording a broadcast program of the channel having a high viewing frequency during a corresponding extracted time zone when a current time reaches individual extracted time zones.

According to the above-mentioned features of the present invention, the present invention selectively performs or releases a reserved recording function of a corresponding channel by determining whether or not a user currently views broadcast signals of a reserved recording channel when a current time reaches a reserved recording time, so that it prevents a previously-viewed broadcast program or a currently-viewed broadcast program from being unnecessarily recorded.

Also, the present invention can automatically record broadcast signals of a specific channel having the highest viewing frequency during individual time zones in the case of the user's absence, so that the user can conveniently execute the reserved recording function without using additional complicated processes.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram illustrating an apparatus for performing a reserved recording function and its peripheral devices in a broadcast signal recorder device in accordance with a preferred embodiment of the present invention;
Fig. 2a and 2b is a flow chart illustrating a method for performing a reserved recording function in accordance with a preferred embodiment of the present invention;
Fig. 3 is a flow chart illustrating a method for performing a reserved recording function in accordance with another preferred embodiment of the present invention; and
Fig. 4 is an exemplary table illustrating viewing-channel information for every time zone in accordance with the present invention.

### DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

For reference, a preferred embodiment of the present invention will exemplarily disclose a digital broadcast signal recorder system, and it is assumed that the digital broadcast signal recorder device is basically able to perform an On-Screen Display (OSD) function.

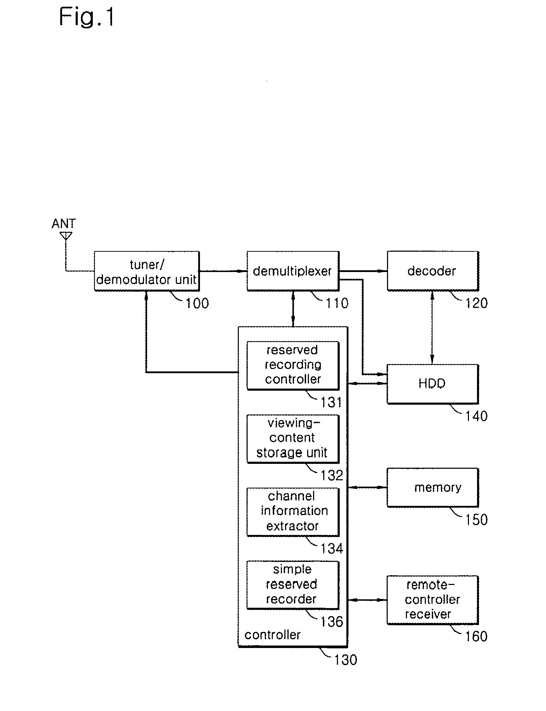

Fig. 1 is a block diagram illustrating an apparatus for performing a reserved recording function and its peripheral devices in a broadcast signal recorder device in accordance with a preferred embodiment of the present invention.

Referring to Fig. 1, a tuner/demodulator unit 100 receives a digital broadcast stream from a selected channel according to a control signal of a controller 130, demodulates the received digital broadcast stream, and outputs the demodulated broadcast stream.

A demultiplexer 110 demultiplexes the demodulated broadcast stream generated from the tuner/demodulator unit 100, and outputs the demultiplexed broadcast stream. The demultiplexer 110 is classified into a viewing demultiplexer and a recording demultiplexer according to categories of systems, such that the viewing or recording demultiplexer is suitably mounted to the systems.

A decoder 120 decodes video and audio streams demultiplexed by the demultiplexer 110, so that it outputs the decoded video stream to a video encoder and outputs the decoded audio stream to an audio Digital-to-Analog Converter (DAC). An HDD 140 acting as a recording medium stores demultiplexed broadcast stream information generated from the demultiplexer 110 according to a control signal of the controller 130.

The controller 130 controls overall operations of a digital broadcast signal receiver. Specifically, the controller 130 includes a reserved recording controller 131 for controlling a reserved recording function, a viewing-content storage unit 132 for storing viewing-content data, a channel information extractor 134, and a simple reserved recorder 136 for executing a simple reserved recording function such as a one-touch reserved recording. The above-mentioned components contained in the controller 130 can be configured by dedicated hardware or software, or a combination of the hardware and software, and it should be noted that the present invention includes a variety of Very Large Scale Integrated Circuit (VLSI) implementation methods.

The reserved recording controller 131 receives reserved recording time and channel information from a remote-controller receiver 160, stores the received time and channel information in a memory 150, records broadcast signals generated from the reserved recording channel when a current time reaches the reserved recording time, and releases the reserved recording function when a user currently views broadcast signals of the reserved recording channel.

According to another preferred embodiment of the present invention, the reserved recording controller 131 receives reserved recording time and channel information, stores the received time and channel information, changes a current channel to the reserved recording channel when a current time reaches the reserved recording time during a system operation time, and performs or releases the reserved recording function upon receiving a request from a user who responding to a message for releasing the reserved recording function.

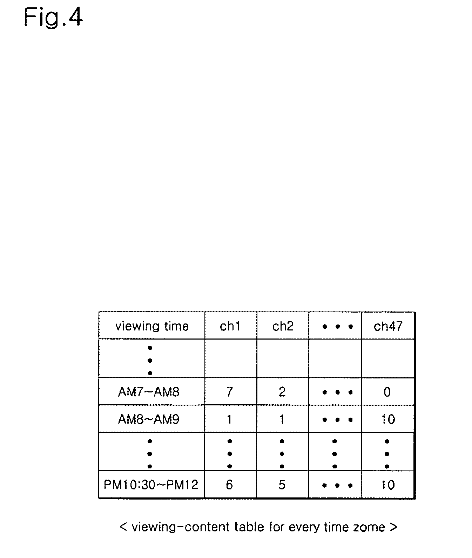

The viewing-content storage unit 132 stores viewing-channel information for every time zone in the memory 150, so that it configures a table showing viewing-channel information for every time zone as shown in Fig. 4.

The channel information extractor 134 reads the above-mentioned viewing-channel information table for every time zone from the memory 150, and extracts channel information having a high viewing frequency (i.e., the high number of viewing times) from individual time zones.

When a current time reaches individual time zones extracted by the channel information extractor 134, the simple reserved recorder 136 controls a system to record broadcast signals generated from a channel of a high viewing frequency during a corresponding time zone. The simple reserved recorder 136 receives a command for executing a simple reserved recording function from the remote-controller receiver 160, and is activated by the received command. If a manipulation command occurs on the condition that a current mode is equal to a simple reserved recording mode, or if a command for releasing the simple reserved recording function occurs in the simple reserved recording mode, the simple reserved recorder 136 releases the simple reserved recording mode and enters an inactive state.

The memory 150 stores not only viewing-content information for every time zone as shown in Fig. 4, but also reserved recording time and channel information. The remote-controller receiver 160 receives a device control signal from a remote-controller acting as a user interface, decodes the received device control signal, and transmits the decoded device control signal to the controller 130.

A reserved recording method for use in the above-mentioned digital broadcast signal receiver will hereinafter be described.

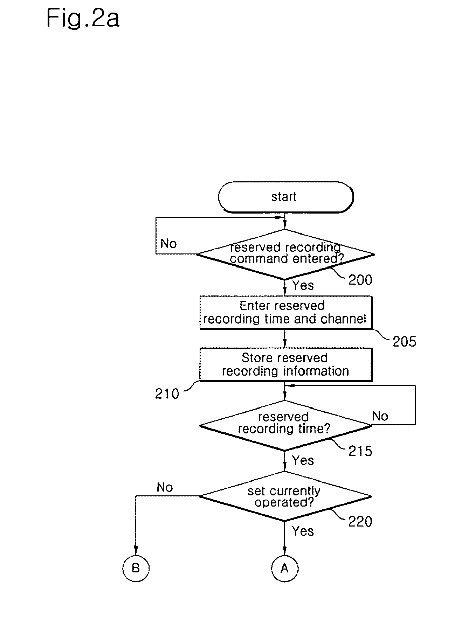

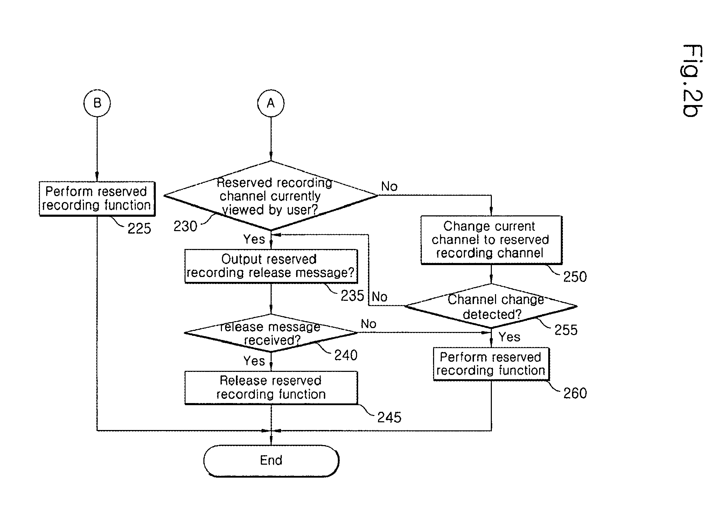

Fig. 2a and 2b is a flow chart illustrating a method for performing a reserved recording function in accordance with a preferred embodiment of the present invention.

Referring to Fig. 2a and 2b, upon receiving a reserved recording command from the remote-controller receiver 160 at step 200, the reserved recording controller 131 requests a user to enter a reserved recording time and a reserved recording channel. If the user enters the reserved recording time and channel information in response to the reserved recording command, the reserved recording controller 131 receives the user-entry reserved recording time and channel information at step 205, and stores the received time and channel information as reserved recording information in the memory 150 at step 210.

The reserved recording controller 131 having stored the reserved recording information determines whether a current time reaches the reserved recording time at step 215. If it is determined that the current time reaches the reserved recording time at step 215, the reserved recording controller 131 determines whether the digital broadcast signal receiver set is currently operated at step 220. In this case, the reserved recording controller 131 may determine the state of the digital broadcast signal receiver set by checking a flag bit indicative of an operation mode. If the digital broadcast signal receiver set is not operated at the reserved recording time at step 220, the reserved recording controller 131 performs a reserved recording function as in a general broadcast signal receiver at step 225.

Otherwise, if it is determined that the digital broadcast signal receiver set is currently operated at the reserved recording time at step 220, i.e., if a user views broadcast signals of a specific channel or views a recorded file of the specific channel at step 220, the reserved recording controller 131 determines whether the specific channel is equal to the reserved recording channel at step 230. If it is determined that the user currently views broadcast signals of the reserved recording channel at step 230, the reserved recording controller 131 informs the user of a reserved recording release message "Do you want to release the reserved recording ?" through the use of an OSD at step 235. In this case, the determination for displaying the above-mentioned reserved recording release message may be selectively determined by the reserved recording controller 131.

If a user enters a command responding to the reserved recording release message, the reserved recording controller 131 releases the reserved recording function at step 245, so that it prevents broadcast streams of the current viewing channel of the user from being unnecessarily recorded.

Upon receipt of a command for executing the reserved recording function in response to the reserved recording release message, the reserved recording controller 131 performs the reserved recording function at step 260, because the user may desire to repeatedly view the broadcast stream of the current viewing channel at a later time although the user currently views broadcast signals of the reserved recording channel.

According to the above-mentioned preferred embodiment, the reserved recording controller 131 outputs the reserved recording release message, queries the user for the release or maintenance of the reserved recording function of the current viewing channel, so that the reserved recording function is selectively executed. However, the reserved recording controller 131 may immediately release the reserved recording function without releasing the reserved recording release message. In more detail, provided that the user views broadcast signals of the reserved recording channel at the reserved recording time, the reserved recording controller 131 compulsorily releases the reserved recording function, so that it prevents a broadcast stream of the current viewing channel of the user from being unnecessarily recorded.

According to a second preferred embodiment of the present invention, it is assumed that the user views broadcast signals of channels other than the reserved recording channel at the reserved recording time. In order to cope with the above assumption, the reserved recording controller 131 changes a current viewing channel to the reserved recording channel at step 250 on the condition that the user currently views broadcast signals of channels other than the reserved recording channel, so that the user recognizes the fact that the user has established the reserved recording function by viewing broadcast signals of the reserved recording channel. However, there is no need for the user to view the broadcast signals of the reserved recording channel at the reserved recording time, because the user has previously established the reserved recording function. Therefore, if the user changes the reserved recording channel to the initial viewing channel at step 255, the reserved recording controller 131 performs the reserved recording function using predetermined information at step 260.

However, if the user does not change the reserved recording channel to the initial viewing channel during a predetermined period at step 255, the reserved recording controller 131 returns to step 235 to output the reserved recording release message, so that it is capable of controlling an overall system to perform the reserved recording function according to a user's request.

As described above, the present invention determines whether or not the user views broadcast signals of the reserved recording channel at the reserved recording time, and performs or releases the reserved recording function of a corresponding channel according to the determined result, so that it can prevent a previously-viewed broadcast program or a currently-viewed broadcast program from being unnecessarily recorded.

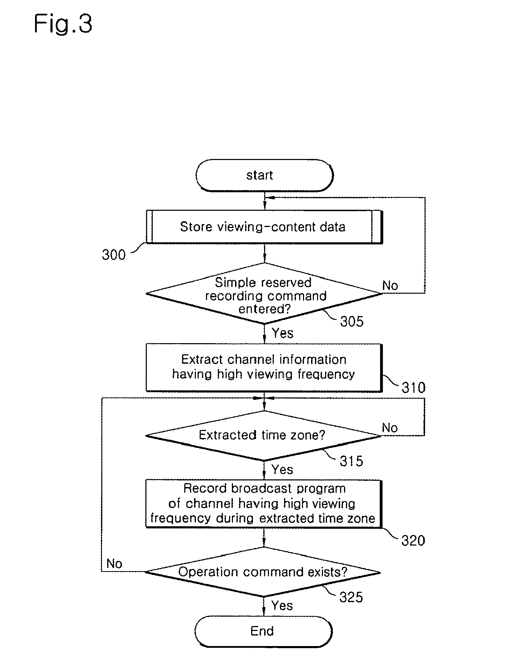

A third preferred embodiment of the present invention will hereinafter be described with reference to Figs. 3~4. Fig. 3 is a flow chart illustrating a method for performing a reserved recording function in accordance with a third preferred embodiment of the present invention. Fig. 4 is an exemplary table illustrating viewing-channel information for every time zone in accordance with the present invention.

Referring to Fig. 3, the controller 130 of the digital broadcast signal receiver according to the third preferred embodiment of the present invention, and more particularly, a viewing-content storage unit 132 contained in the controller 130 stores channel information viewed by the user during individual time zones in the memory at step 300. This operation for storing the viewing-content data for every time zone is performed whenever the user views a broadcast program. Provided that the viewing-content data for every time zone is collected during a predetermined period, the table shown in Fig. 4 can be configured as an example.

If the remote-controller receiver 160 enters a simple reserved recording command at step 305 on the condition that the viewing-content data for every time zone is stored in the form of the table of Fig. 4, the channel information extractor 134 extracts channel information having a high viewing frequency during individual time zones from the memory 150 at step 310, and transmits the extracted channel information to the simple reserved recorder 136. If a current time reaches each extracted time zone at step 315, the simple reserved recorder 136 controls the tuner/demodulator unit 100 to select a channel having the highest viewing frequency during the corresponding time zone, and controls the HDD 140 to record a broadcast program of the selected channel at step 320. In this case, an operation mode of the digital broadcast signal receiver set can be determined to be a simple reserved recording mode.

If the digital broadcast signal receiver set is currently operated during the simple reserved recording mode, i.e., if the user enters a specific command or a command for releasing the simple reserved recording mode, the simple reserved recorder 136 stops the recording operation. If there is no command for the digital broadcast signal receiver set, the simple reserved recorder 136 stops the recording operation at the end time of the extracted time zone.

As stated above, the present invention can automatically record a broadcast stream of a specific channel having the high viewing frequency during individual time zones using only the simple reserved recording command, so that it provides a user unskilled in handling the digital broadcast signal receiver set or other users hurriedly leaving their rooms with greater convenience of use.

As apparent from the above description, the present invention provides an apparatus and method for performing a reserved recording function, which selectively performs or releases a reserved recording function of a corresponding channel by determining whether or not a user currently views broadcast signals of a reserved recording channel when a current time reaches a reserved recording time. Therefore, the present invention prevents a previously-viewed broadcast program or a currently-viewed broadcast program from being unnecessarily recorded, and provides the user with greater convenience of use of the reserved recording function.

Also, the present invention can automatically record a broadcast stream of a specific channel having the highest viewing frequency during individual time zones using only the simple reserved recording command, so that it provides a user unskilled in handling the digital broadcast signal receiver set or other users hurriedly leaving their rooms with greater convenience of use of the reserved recording function.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A reserved recording method for use in a broadcast signal recorder capable of recording a received broadcast signal in a recording medium, comprising the steps of:
receiving reserved recording time information and reserved recording channel information, and storing the received time and channel information;
determining whether a user views the reserved recording channel information at the reserved recording time; and
deleting the stored reserved recording time and channel information if it is determined that the user views the reserved recording channel information at the reserved recording time.

2. The method according to claim 1, further comprising the steps of:
storing viewing-channel information for every time zone;
extracting channel information having a high viewing frequency during individual time zones from the stored viewing-channel information for every time zone when a simple reserved recording command is generated; and
recording a broadcast program of the channel having a high viewing frequency during a corresponding extracted time zone when a current time reaches individual extracted time zones.

3. The method according to claim 2, further comprising the step of:
releasing a simple reserved recording mode in response to an operation command or a command for releasing the simple reserved recording command.

4. A reserved recording method for use in a broadcast signal recorder capable of recording a received broadcast signal in a recording medium, comprising the steps of:
receiving reserved recording time information and reserved recording channel information, and storing the received time and channel information;
changing a current channel to the reserved recording channel when the broadcast signal recorder is currently operated at the reserved recording time; and
performing or releasing a reserved recording function according to a user's command.

5. The method according to claim 4, further comprising the step of:
after changing the current channel to the reserved recording channel, generating a message for releasing the reserved recording function.

6. The method according to any one of claims 4 and 5, further comprising the steps of:
storing viewing-channel information for every time zone;
extracting channel information having a high viewing frequency during individual time zones from the stored viewing-channel information for every time zone when a simple reserved recording command is generated; and
recording a broadcast program of the channel having a high viewing frequency during a corresponding extracted time zone when a current time reaches individual extracted time zones.

7. A reserved recording method for use in a broadcast signal recorder capable of recording a received broadcast signal in a recording medium, comprising the steps of:
storing viewing-channel information for every time zone;
extracting channel information having a high viewing frequency during individual time zones from the stored viewing-channel information; and
recording a broadcast program of the channel having a high viewing frequency during a corresponding extracted time zone when a current time reaches individual extracted time zones.

8. The method according to claim 7, wherein the recording step is executed by a simple reserved recording command, and is released by a command for releasing the simple reserved recording command.

9. A broadcast signal recorder apparatus including a tuner/demodulator unit for demodulating a broadcast signal received from a selected channel and a decoder for decoding the demodulated broadcast signal in the form of video and audio streams, and recording a signal-processed broadcast stream in a recording medium, the apparatus comprising:
a reserved recording controller for receiving reserved recording time information and reserved recording channel information, recording the reserved recording channel information when a current time reaches the reserved recording time, and deleting the stored reserved recording time and channel information when a user views the reserved recording channel information at the reserved recording time.

10. The apparatus according to claim 9, further comprising:
a viewing-content storage unit for storing viewing-channel information for every time zone in a memory;
a channel information extractor for extracting channel information having a high viewing frequency during individual time zones from the information stored in the memory; and
a simple reserved recorder for recording a broadcast program of the channel having a high viewing frequency during a corresponding extracted time zone when a current time reaches individual extracted time zones.

11. The apparatus according to claim 10, wherein the simple reserved recorder is activated by a simple reserved recording command.

12. A broadcast signal recorder apparatus including a tuner/demodulator unit for demodulating a broadcast signal received from a selected channel and a decoder for decoding the demodulated broadcast signal in the form of video and audio streams, and recording a signal-processed broadcast stream in a recording medium, the apparatus comprising:
a reserved recording controller for receiving reserved recording time information and reserved recording channel information, storing the received time and channel information, changing a current channel to the reserved recording channel when the broadcast signal recorder is currently operated at the reserved recording time, and performing or releasing a reserved recording function according to a user's command.

13. The apparatus according to claim 12, further comprising:
a viewing-content storage unit for storing viewing-channel information for every time zone in a memory;
a channel information extractor for extracting channel information having a high viewing frequency during individual time zones from the information stored in the memory; and
a simple reserved recorder for recording a broadcast program of the channel having a high viewing frequency during a corresponding extracted time zone when a current time reaches individual extracted time zones.
